# EUROPÄISCHE PATENTANMELDUNG

(11) **EP 4 124 233 A1**
(43) Veröffentlichungstag der Anmeldung: **01.02.2023**
(21) Anmeldenummer: 22186450.7
(22) Anmeldetag: 22.07.2022
(51) Int. Cl.: A01D 57/20, A01D 90/10

(54) **ABLAGEVORRICHTUNG EINER ERNTEMASCHINE UND ERNTEMASCHINE**

(30) Priorität: 29.07.2021 DE 202021104072 U
(71) Anmelder: Grimme Landmaschinenfabrik GmbH & Co. KG, 49401 Damme (DE)
(72) Erfinder: Freking, Rene, 49090 Osnabrück (DE)
(74) Vertreter: Wischmeyer, André

(57) **Zusammenfassung**

Die Erfindung betrifft eine Ablegevorrichtung für eine Erntemaschine und zum Ablegen von Ablegegut in Form von Erntegut und/oder Beimengen, mit einem an einem Ablegerahmen gehaltenen, insbesondere bandförmigen und umlaufenden Ablegemittel, wobei dem Ablegerahmen ein Schwenklager zugeordnet ist, um relativ zu einem Rahmen der Erntemaschine aus einer Straßenposition in eine Betriebsposition, in der Ablegegut zumindest anteilig in eine Querrichtung quer zur Fahrtrichtung der Erntemaschine transportierbar ist, zu verschwenken, wobei die Ablegevorrichtung eine Führungsvorrichtung mit zumindest einem Stellmittel aufweist, über die der Ablegerahmen mit dem Schwenklager zumindest anteilig in die Querrichtung beweglich ist. Ferner betrifft die Erfindung eine Erntemaschine für Erntegut insbesondere in Form von Hackfrüchten mit einem an einem Rahmen gelagerten Förderer zum Transport des Ernteguts zu einer Ablegevorrichtung (Fig. 5)

## Beschreibung

Die vorliegende Erfindung betrifft eine Ablegevorrichtung für eine Erntemaschine und zum Ablegen von Ablegegut in Form von Erntegut und/oder Beimengen, mit einem an einem Ablegerahmen gehaltenen, insbesondere bandförmigen und umlaufenden Ablegemittel, wobei dem Ablegerahmen ein Schwenklager zugeordnet ist, um relativ zu einem Rahmen der Erntemaschine aus einer Straßenposition in eine Betriebsposition, in der Ablegegut zumindest anteilig in eine Querrichtung quer zur Fahrtrichtung der Erntemaschine transportierbar ist, zu verschwenken. Des Weiteren betrifft die vorliegende Erfindung eine Erntemaschine mit einer solchen Ablegevorrichtung.

Auf dem Markt bekannte Ablegevorrichtungen lassen sich manuell aus einer innerhalb einer Umhüllenden der Erntemaschine angeordneten Straßenposition manuell in eine Betriebsposition verschwenken, in der das Ablagemittel das Ablegegut quer zur Fahrtrichtung der Erntemaschine aus dieser herausbefördert. Sofern die Ablagevorrichtung in unterschiedlichen Schwenkwinkeln positionierbar ist, kann das Erntegut je nach Steigung des Ablegemittels unterschiedlich weit aus der Erntemaschine heraus abgelegt werden. In Abhängigkeit von dem Stellwinkel (und der Fördergeschwindigkeit des Förderers) kann das Ablegegut unterschiedlich weit seitlich von der Erntemaschine abgelegt werden. Bei der Einstellung des Anstellwinkels ist allerdings gleichzeitig auf die Höhe über dem Untergrund zu achten, damit insbesondere bei tief einsinkenden Maschinen und Ablegevorrichtungen, die im Bereich eines hinteren Querförderers angeordnet sind, kein die Ablegevorrichtung beeinträchtigender oder beschädigender Bodenkontakt entsteht.

Es ist Aufgabe der vorliegenden Erfindung, eine gattungsgemäße Ablegevorrichtung für eine größere Anzahl von Einsatzbedingungen auszubilden.

Die Aufgabe wird gelöst durch eine Ablegevorrichtung nach Anspruch 1 und durch eine Erntemaschine nach Anspruch 12. Vorteilhafte Ausgestaltungen der Erfindung sind den hierauf rückbezogenen Unteransprüchen sowie der nachfolgenden Beschreibung zu entnehmen.

Eine erfindungsgemäße Ablegevorrichtung zeichnet sich dadurch aus, dass sie eine Führungsvorrichtung mit zumindest einem Stellmittel aufweist, über die der Ablegerahmen mit dem Schwenklager zumindest anteilig in die Querrichtung beweglich ist. In Ergänzung zu der Schwenkbewegung kann aufgrund der mittels des Stellmittels bewirkten Verstellung projiziert auf den Untergrund und mittels der Führungsvorrichtung eine laterale Bewegung des Ablegerahmens mit dem Ablegemittel durchgeführt werden, so dass insgesamt eine Schwenk-Lateralbewegung durchgeführt werden kann. Dies ermöglicht einerseits eine gute Integration in den Rahmen der Erntemaschine und andererseits eine größere Abdeckung unterschiedlicher Ablegeweiten, insbesondere für Reihen von Hackfrüchten zwischen 50 cm und 100 cm Abstand. Die Ablegevorrichtung ist insbesondere in der Straßenposition hochgeklappt bzw. -verschwenkt und in einer Ansicht einer zugehörigen Erntemaschine von vorne oder hinten insbesondere nicht über die weiteren Seitenelemente der Erntemaschine hinausstehend, während in der Betriebsposition sowohl eine Verschwenkung des Rahmens als auch eine seitliche Bewegung des Ablegerahmens erfolgen kann.

Zur Erzeugung der bezogen auf die Erntemaschine, in der die Ablegevorrichtung anzuordnen ist, lateralen, d.h. seitlichen Bewegung des Schwenklagers und des mit diesem verbundenen Ablegerahmens können unterschiedliche Stellmittel verwendet werden. Insbesondere handelt es sich um zumindest ein elektromotorisches, pneumatisches und/oder ein hydraulisches Stellmittel in Form eines Hydraulikmotors oder -zylinders. Die Führungsvorrichtung kann auf beiden Rahmenseiten des Ablegerahmens ausgebildet sein und entsprechend auf beiden Seiten jeweils ein Stellmittel aufweisen.

Die Führungsvorrichtung gibt eine Bewegung des Schwenklagers und damit des Ablegerahmens vor, wobei diese Bewegung je nach Ausführungsbeispiel noch durch weitere Mittel variiert werden kann. Der Ablegerahmen ist im Schwenklager gelagert und verschwenkt beim Übergang aus der Betriebs- in die Straßenposition und umgekehrt um die Schwenkachse des Schwenklagers.

Vorteilhafterweise weist die Führungsvorrichtung zumindest einen durch das zumindest eine Stellmittel bewegten Lenker auf, der am Rahmen festzulegen ist und das Schwenklager mit ausbildet. Insbesondere ist an zwei Seiten des Ablegerahmens jeweils ein Lenker der Führungsvorrichtung angeordnet, insbesondere wobei in Seitenansicht des Ablegerahmens diese Lenker zumindest hinsichtlich ihrer Lagerpunkte deckungsgleich sind. Eine seitliche Ansicht der Ablegevorrichtung bzw. des Ablegerahmens entspricht einer Ansicht in oder gegen die hauptsächliche Fahrtrichtung der Erntemaschine im Betrieb. Vorzugsweise ist die Ablegevorrichtung auf einer linken Seite einer Erntemaschine angeordnet, so dass eine Seitenansicht auf eine linke Seite des Ablegerahmens parallel zu einer Ansicht von hinten auf die Erntemaschine ist.

Es versteht sich, dass für bei Integration der Ablegevorrichtung in die Erntemaschine ein Teil der Führungsvorrichtung am Erntemaschinenrahmen angeordnet sein kann.

Gemäß einer weiteren vorteilhaften Ausbildung der Erfindung weist die Führungsvorrichtung wenigstens ein Führungsmittel auf, an dem zumindest ein Anlagemittel des Ablegerahmens entlang geführt wird. Ein solches Führungsmittel kann insbesondere zumindest teilweise an einem Rahmen der Erntemaschine angeordnet sein. Es stellt zumindest eine Führungsfläche zur Verfügung, über die der Ablegerahmen geführt werden kann. Wie auch hinsichtlich der Lenker kann die Ablegevorrichtung insbesondere zwei Führungsmittel aufweisen, die jeweils auf einer Seite des vorzugsweise im Wesentlichen rechteckig ausgebildeten Ablegerahmens der Ablegevorrichtung angeordnet sind. Der Ablegerahmen weist in diesem Fall ebenfalls jeweils auf einer Seite zumindest ein Führungsmittel auf, über das der Ablegerahmen an dem Anlagemittel geführt wird. Insbesondere kann es sich bei dem Anlagemittel um eine am Ablegerahmen angeordnete Rolle, eine Hülse oder ein mit einer Reibung reduzierenden Beschichtung beispielsweise in Form von Polyurethan oder Teflon versehenes Anlagemittel handeln.

Gemäß einer weiteren vorteilhaften Ausbildung der Erfindung ist in zumindest einer der Betriebs- und/oder Straßenpositionen der Ablegerahmen gegenüber dem oder den Lenkern vorgespannt. Die Vorspannung bewirkt zumindest in dem Maß, in dem die Vorspannkräfte nicht überstiegen werden, eine Zwangsführung des Ablegerahmens relativ zum Lenker und insbesondere an dem oder den Anlagemitteln. Durch die Bewegung des zumindest einen Lenkers mittels des Stellmittels kann der Ablegerahmen mit dem Ablegemittel an dem Anlagemittel entlang geführt werden, so dass sich durch die Kombination der Lenkerbewegung, der Vorspannung und dem Anlagemittel in der Seitenansicht des Ablegerahmens eine definierte Steuerbahn oder Kurve ergibt, die die Bewegung der Ablegevorrichtung beschreibt. Auf diese Weise ist eine einfach aufzubauende und zu steuernde Schwenk- und Lateralbewegung des Ablagemittels erzeugt.

Insbesondere ist zur Erzeugung der Vorspannung zwischen Ablegerahmen und Lenker ein Kraftspeicher angeordnet. Dieser kann beispielsweise in Form einer zwischen Ablegerahmen und Lenker angeordneten Feder ausgebildet sein. Hierbei ist die Feder so am Lenker angeordnet, dass das entstehende Drehmoment den Ablegerahmen mit dem Anlagemittel an eine Anlagefläche der Führungsvorrichtung drückt. Die Feder kann als linear wirkende Feder zwischen Lenker und Ablegerahmen angeordnet sein, sie kann auch als Drehfeder im Bereich des Schwenklagers angeordnet sein.

Vorzugsweise bildet das Führungsmittel eine mit zueinander angewinkelten Abschnitten und/oder zumindest einem gekrümmten Abschnitt versehene Anlagefläche aus. Der Verlauf der Anlagefläche bestimmt auf konstruktiv einfache Weise die Bewegung des Ablegerahmens.

Bei einer weiteren erfindungsgemäßen Weiterbildung ist das Anlagemittel in der Straßenposition in einem zumindest im Wesentlichen senkrecht zu einem horizontalen Untergrund ausgerichteten Teil der Anlagefläche angeordnet, wobei das Schwenklager ober- oder unterhalb dieses Anlagemittels positioniert ist. Durch die Vorspannung wird der Ablegerahmen einerseits an diese senkrecht zum Untergrund verlaufende Fläche, deren Flächennormale entsprechend parallel zum Untergrund verläuft, gedrückt und ist andererseits über das Schwenklager gehalten. Es ergibt sich eine sichere, totpunktähnliche Festlegung des Ablegerahmens für die Straßenfahrt, insbesondere wobei das oder die Stellmittel in Form von Zylindern maximal ausgefahren sind.

Allgemein ist ein Lenker der Ablegevorrichtung an einem Rahmen der Erntemaschine schwenkbar gehalten, so dass sich durch die Verschwenkung des oder der Lenker und aus der Führung des Ablegerahmens an dem Führungsmittel die gewünschte Bewegung des Ablegerahmens aus einer im Wesentlichen vertikalen Straßenposition in eine im Wesentlichen horizontale Betriebsposition ergibt.

Vorteilhafterweise zeichnet sich eine erfindungsgemäße Weiterbildung einer Ablegevorrichtung dadurch aus, dass das Schwenklager und/oder das Anlagemittel für die Überführung aus der Betriebsposition in die Straßenposition in einer Seitenansicht auf den Ablegerahmen eine Bahn überstreichen, deren linker und rechter Endpunkt höher über dem Untergrund liegt als ein mittlerer Punkt. In dieser Ansicht bildet eine Fläche, die durch die Bahn und eine Verbindungslinie der oberen Punkte begrenzt und mit ausgebildet wird eine im mathematischen Sinne konvexe Menge. Beispielsweise ist die durch das Anlagemittel ausgebildete Bahn u-förmig, als liegendes C oder als Kombination hiervon ausgebildet, während das Schwenklager einen Abschnitt einer Kreisbahn beschreibt. Durch diese Form der Anlagefläche wird ein Teil der Schwenkbewegung des Schwenklagers des Ablegerahmen bei Bewegung des oder der Lenker nachvollzogen, so dass sich einerseits eine Verschwenkung des Ablegerahmens, jedoch andererseits eine teilweise Lateralbewegung ergibt. Insbesondere ist das Anlagemittel in einer seitlichen Ansicht des an einer linken Seite einer Erntemaschine angeordneten Ablegerahmens rechts vom Schwenklager angeordnet.

Vorteilhafter sind in der Betriebsposition und in der Seitenansicht der Schwerpunkt einer den Ablegerahmen und das Ablegemittel umfassenden Baueinheit und das Anlagemittel auf unterschiedlichen Seiten des Schwenklagers angeordnet, so dass sich bereits hieraus ein Drehmoment und eine Anlage an der Anlagefläche des Führungsmittels ergibt. Durch die Vorspannung wird dieses Drehmoment verstärkt. Auch das Antriebsorgan des Ablagemittels kann Teil der Baueinheit sein.

Gemäß einer Weiterbildung der erfindungsgemäßen Ablegevorrichtung nach bildet die Führungsvorrichtung eine Kulisse aus, in der das Anlagemittel verläuft, so das nur in Richtung der Erstreckung der Kulisse ein Freiheitsgrad existiert, der die Bewegung des Ablegerahmens definiert.

Alternativ kann die Führungsvorrichtung allerdings das Anlagemittel in einer Seitenansicht jedoch nur einseitig begrenzen. Dies hat den Vorteil, dass gegen das durch den Schwerpunkt des Ablegerahmens und die Vorspannung bewirkte Drehmoment in der Betriebsposition eine Bewegung des Ablegerahmens möglich ist. Hierdurch kann der Ablegerahmen Hindernisse ausweichen, beispielsweise, wenn die Erntemaschine im Betrieb zur tief einsinkt und in Kontakt mit beispielweise einem Kartoffeldamm gelangt. Für eine solche Schutzfunktion kann der der Ablegerahmen in einer Ansicht in Querrichtung eine Auflaufschräge zur Erzeugung eines vom Untergrund nach oben gerichteten Impuls aufweisen. Eine Ansicht in Querrichtung, d.h. quer zur Fahrtrichtung einer Erntemaschine im montierten Zustand der Ablegevorrichtung, entspricht der Frontansicht auf den Rahmen alleine und einer Seitenansicht der Erntemaschine.

Die vorstehend definierte Aufgabe wird ebenfalls durch eine Erntemaschine für Erntegut insbesondere in Form von Hackfrüchten, gelöst, die mit einem an einem Rahmen gelagerten Förderer zum Transport des Ernteguts zu einer Ablegevorrichtung aufweist, und die eine vor- oder nachbeschriebene Ablegevorrichtung aufweist. Entsprechend kommen dieser Erntemaschine die beschriebenen Vorteile zu.

Insbesondere ist eine erfindungsgemäße Erntemaschine mit einem vorzugsweise angeschrägten Rahmen versehen, wobei der oder die Lenker zwecks zumindest eines teilweisen Hintergreifens des Rahmens der Erntemaschine gekrümmt ausgebildet sind. Dieses Hintergreifen aus der Sicht des rahmenseitigen Schwenklagers des Lenkers führt zu einer größeren Bewegungsfreiheit für die Durchführung einer Verschwenkung des Lenkers, der am Rahmen der Erntemaschine schwenkbar angeordnet ist.

Weitere Vorteile und Einzelheiten der Erfindung sind der nachfolgenden Figurenbeschreibung zu entnehmen. Schematisch dargestellt zeigt:
- Fig. 1: eine erfindungsgemäße Erntemaschine,
- Fig. 2 - 4: Ansichten einer erfindungsgemäßen Ablegevorrichtung,
- Fig. 5 - 7: den Fig. 2 - 4 entsprechende Teilansichten einer erfindungsgemäßen Erntemaschine,
- Fig. 8.: eine weitere erfindungsgemäße Ablegevorrichtung,
- Fig. 9: eine weitere erfindungsgemäße Ablegevorrichtung,
- Fig. 10: eine teilweise Ansicht einer erfindungsgemäßen Ablegevorrichtung in unterschiedlichen Positionen.

Einzelne technische Merkmale der nachfolgend beschriebenen Ausführungsbeispiele können mit den Merkmalen zumindest des unabhängigen Anspruchs zu erfindungsgemäßen Weiterbildungen führen. Sofern sinnvoll sind identische Bezugsziffern für gleichwirkende Merkmale vergeben.

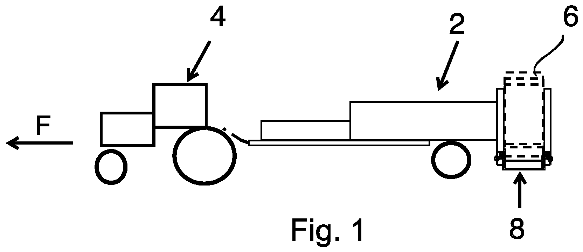

Eine erfindungsgemäße Erntemaschine 2 ist vorliegend als von einem Schlepper 4 gezogene Hackfruchterntemaschine ausgebildet. Die Erntemaschine 2 weist einen hinteren als Querförderer ausgebildeten Förderer 6 auf, über den Erntegut einer erfindungsgemäßen Ablegevorrichtung 8 zugeführt werden kann (Fig. 1).

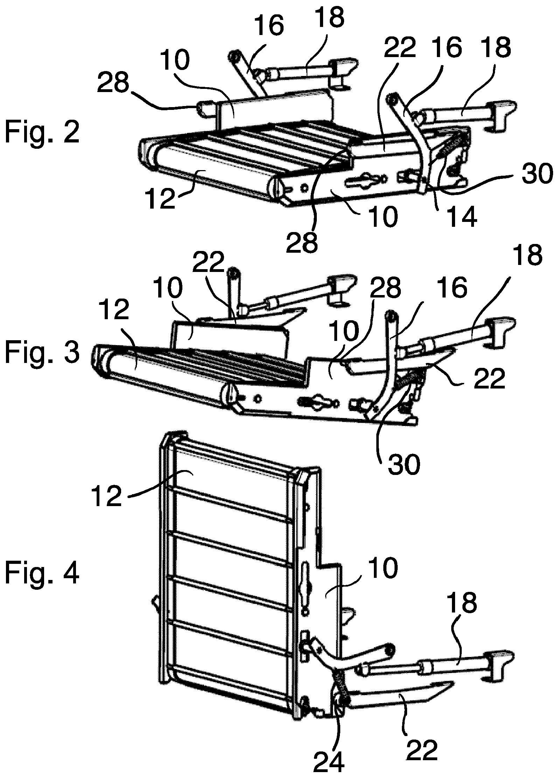

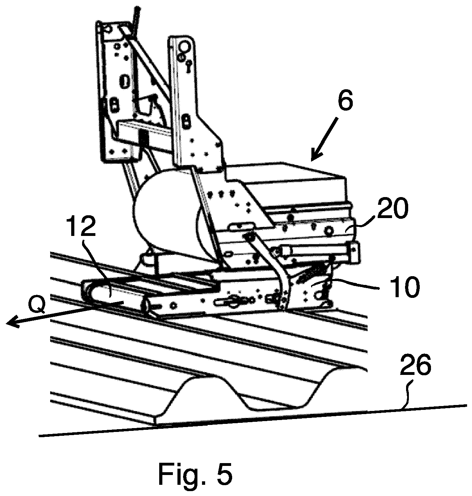

Eine erfindungsgemäße Ablegevorrichtung 8 umfasst gemäß den nachfolgenden Fig. 2 bis 4 sowie - integriert in eine Erntemaschine 5 bis 6 - einen Ablegerahmen 10, an den ein vorliegend bandförmig für die Förderung von Hackfrüchten in Form von Kartoffeln ausgebildetes Ablegemittel 12 gehalten ist. In einer Draufsicht auf den Rahmen in der Betriebssituation gemäß Fig. 2 weist der Rahmen eine in etwa rechteckige Form auf. Der Ablegerahmen 10 ist in Schwenklagern 14 gelagert, die auf beiden Seiten des Ablegerahmens 10 mit Lenkern 16 einer Führungsvorrichtung ausgebildet werden. Ebenfalls umfasst die Führungsvorrichtung Stellmittel 18, die einenends am Lenker 16 schwenkbar angeordnet sind und anderenends an einem Rahmen 20 der Erntemaschine (vgl. Fig. 5ff) befestigt bzw. anzuordnen sind. Weiterhin umfasst die Führungsvorrichtung auf jeder Seite des Ablegerahmens 10 anzuordnende Führungsmittel 22 in Form von Führungsschienen, an denen jeweils Anlagemittel 24, die am Ablegerahmen 10 angeordnet sind mittels des Stellmittels entlangbewegt werden.

Die zwei Lenker 16 der Führungsvorrichtung sind wie auch die beiden Stellmittel 18 und die Anlagemittel 24 in einer Seitenansicht des Ablegerahmens 10, an die parallel zur Fahrtrichtung F erfolgt, deckungsgleich angeordnet, so dass der Ablegerahmen 10 auf beiden Seiten geführt ist. Die Führungsmittel 22 weisen an ihrem in den Figuren linken Ende senkrecht zu einem horizontalen Untergrund 26 ausgerichtete Teile 28 einer vom Führungsmittel 22 ausgebildeten Anlagefläche auf. An der Anlagefläche des Führungsmittels 22 läuft das Anlagemittel 24 während der Bewegung des Lenkers 16 mittels des Stellmittels 18 entlang, was durch die verschiedenen Positionen der Fig. 2 bis 4, der Fig. 5 bis 8 und der Fig. 10 veranschaulicht wird.

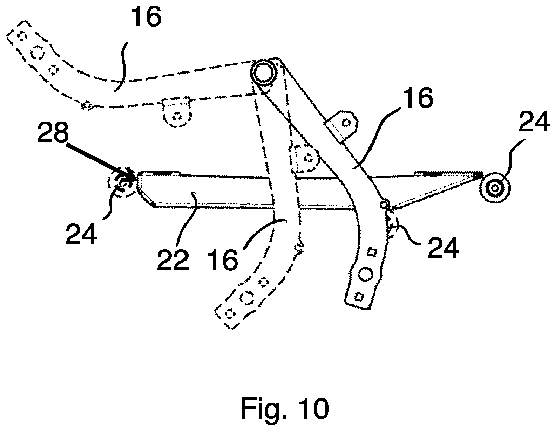

In der Fig. 2 (analog Fig. 5) befindet sich das Ablagemittel 12 in der Betriebsposition. Das als Hydraulikzylinder ausgebildete Stellmittel 18 befindet sich in seiner eingefahrenen Position. In einer Seitenansicht auf den Ablegerahmen 10, der auf der linken Seite einer Erntemaschine angeordnet sein kann und vorliegend dort angeordnet ist, befindet sich das Anlagemittel 24 am Ende er einen Kraftspeicher ausbildenden Feder 30, über die der Lenker 16 mit dem Ablegerahmen 10 verspannt ist. Das Anlagemittel 24 ist auf der rechten Seite des Führungsmittels 22 positioniert (vgl. auch Fig. 10). Die Feder 30 ist dergestalt oberhalb des Schwenklagers 14 angelenkt, dass aufgrund der von der Feder ausgeübten Vorspannung ein Drehmoment entgegen des Uhrzeigersinns um die Schwenkachse bei einer Ansicht von hinten auf die Erntemaschine erzeugt wird und das Anlagemittel 24 somit gegen die Anlagefläche des Führungsmittels 22 gedrückt wird. Da gleichzeitig der Schwerpunkt der Ablegevorrichtung links von der Schwenkachse des Schwenklagers 14 befindlich ist, ist für diesen Fall der Betriebsposition eine eindeutige Festlegung der Position des Ablegemittels gegeben. Die von der Vorspannung und dem Schwerpunkt bewirkten Drehmomente wirken in dieselbe Drehrichtung.

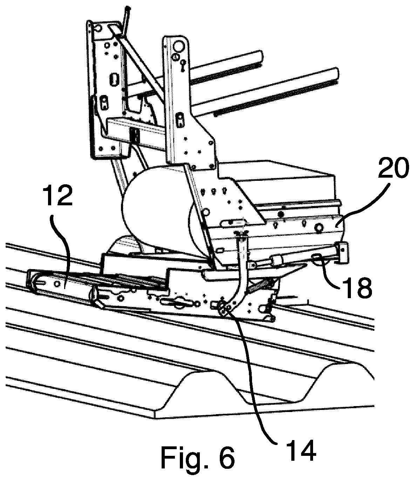

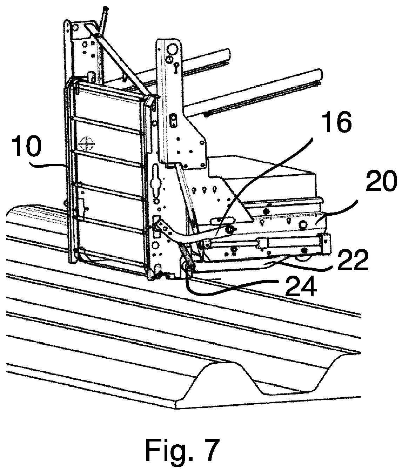

Durch ein Ausfahren des Stellmittels 18 verfährt das Anlagemittel auf der unteren Anlagefläche des Führungsmittels 22 zunächst in die weitere Betriebsposition gemäß Fig. 3 (Fig. 6), in der einerseits das Ablegemittel 12 auf seiner Oberseite leicht angewinkelt zum horizontalen Untergrund steht, gleichzeitig jedoch weiter in Querrichtung Q quer zur Fahrtrichtung verschoben ist und somit etwaiges Erntegut weiter seitlich weg von der Erntemaschine 2 ablegt. Weiteres Ausfahren des Stellmittels 18 führt in Kombination mit den von der Feder 30 ausgeübten Drehmoment dazu, dass der Ablegerahmen mit seinem Anlagemittel 24 auf den Teil 28 der Anlagefläche gedrückt wird (vgl. Fig. 10). Durch diese Festlegung und die Festlegung des Stellmittels 18 ist die Ablegevorrichtung in der in Fig. 4 (Fig. 7) dargestellten Position fixiert, in der ein Teil des Rahmens 20 je nach Krümmung des Lenkers 16 aus Sicht des am Rahmen 20 angeordneten Lagers der Lenkers 16 hintergriffen werden kann. In dieser Straßenposition ist eine sichere Straßenfahrt für die Erntemaschine ermöglicht.

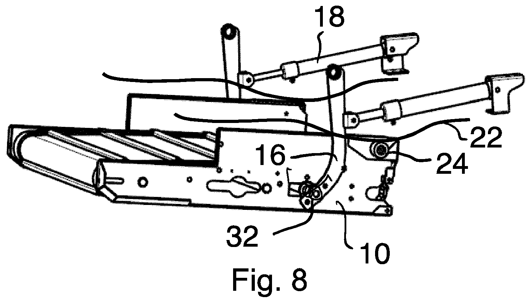

Während das Schwenklager 14 bedingt durch die Verschwenkung des Lenkers 16 in einer Seitenansicht auf den Ablegerahmen 10 eine Kreisbahn vollzieht, ist die Anlagefläche des Führungsmittels 22 in mehrere, zum Teil angewinkelt zueinander stehende Abschnitte unterteilt. Hierdurch wird eine Art Steuerkurve ausgebildet, die die Verschwenkung des Ablegerahmens 10 bewirkt. Je nach Ausbildung der Anlagefläche und ihrer Teilabschnitte kann die Position des Ablegerahmens 10 bestimmt werden. Anstelle einer Linearfeder zwischen Anlagemittel 24 und Lenker 16 weist das Ausführungsbeispiel nach der Fig. 8 eine zwischen Lenker und Ablegerahmen 10 angeordnete Drehfeder 32 als Kraftspeicher auf.

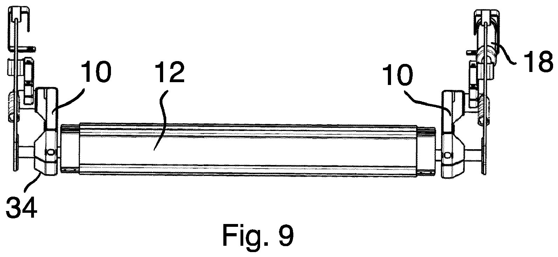

Ergänzend kann der Ablegerahmen 10 mit einer Anlaufschräge 34 versehen sein, über die bei während einer Fahrt auftretendem Bodenkontakt des Ablegerahmens 10 ein Impuls anteilig in Richtung nach oben erzeugt wird, so dass der Ablegerahmen 10 gegen die wirkenden Drehmomente angehoben werden kann (Fig. 9).

## Patentansprüche

1. Ablegevorrichtung für eine Erntemaschine (2) und zum Ablegen von Ablegegut in Form von Erntegut und/oder Beimengen, mit einem an einem Ablegerahmen (10) gehaltenen, insbesondere bandförmigen und umlaufenden Ablegemittel (12), wobei dem Ablegerahmen (10) ein Schwenklager (14) zugeordnet ist, um relativ zu einem Rahmen (20) der Erntemaschine (2) aus einer Straßenposition in eine Betriebsposition, in der Ablegegut zumindest anteilig in eine Querrichtung (Q) quer zur Fahrtrichtung (F) der Erntemaschine (2) transportierbar ist, zu verschwenken, **dadurch gekennzeichnet, dass** die Ablegevorrichtung (8) eine Führungsvorrichtung mit zumindest einem Stellmittel (18) aufweist, über die der Ablegerahmen (10) mit dem Schwenklager (14) zumindest anteilig in die Querrichtung (Q) beweglich ist.

2. Ablegevorrichtung nach Anspruch 1, **dadurch gekennzeichnet, dass** die Führungsvorrichtung zumindest einen durch das zumindest eine Stellmittel (18) bewegten Lenker (16) aufweist, der am Rahmen (20) festzulegen ist und das Schwenklager (14) mit ausbildet.

3. Ablegevorrichtung nach Anspruch 1 oder 2, **dadurch gekennzeichnet, dass** die Führungsvorrichtung wenigstens ein Führungsmittel (22) aufweist, an dem zumindest ein Anlagemittel (24) des Ablegerahmens (10) entlang geführt wird.

4. Ablegevorrichtung nach einem der vorherigen Ansprüche 2 und 3, **dadurch gekennzeichnet, dass** in zumindest einer der Betriebs- und/oder Straßenpositionen der Ablegerahmen (10) gegenüber dem oder den Lenkern (16) vorgespannt ist.

5. Ablegevorrichtung nach Anspruch 4, **dadurch gekennzeichnet, dass** zur Erzeugung der Vorspannung zwischen Ablegerahmen (10) und Lenker (16) ein Kraftspeicher angeordnet ist.

6. Ablegevorrichtung nach einem der vorherigen Ansprüche 3 bis 5, **dadurch gekennzeichnet, dass** das Führungsmittel (22) eine mit zueinander angewinkelten Abschnitten und/oder zumindest einem gekrümmten Abschnitt versehene Anlagefläche ausbildet.

7. Ablegevorrichtung nach einem der vorherigen Ansprüche 3 bis 6, **dadurch gekennzeichnet, dass** das Anlagemittel (24) in der Straßenposition in einem zumindest im Wesentlichen senkrecht zu einem horizontalen Untergrund ausgerichteten Teil (28) der Anlagefläche angeordnet ist, wobei das Schwenklager (14) ober- oder unterhalb dieses Anlagemittels (24) positioniert ist.

8. Ablegevorrichtung nach einem der vorherigen Ansprüche, **dadurch gekennzeichnet, dass** das Schwenklager (14) und/oder das Anlagemittel (24) für die Überführung aus der Betriebsposition in die Straßenposition in einer Seitenansicht auf den Ablegerahmen (10) eine Bahn überstreichen, deren linker und rechter Endpunkt höher über dem Untergrund (26) liegt als ein mittlerer Punkt.

9. Ablegevorrichtung nach einem der vorherigen Ansprüche 3 bis 8, **dadurch gekennzeichnet, dass** in der Betriebsposition und in der Seitenansicht der Schwerpunkt eine den Ablegerahmen (10) und das Ablegemittel (12) umfassenden Baueinheit und das Anlagemittel (24) auf unterschiedlichen Seiten des Schwenklagers (14) angeordnet sind.

10. Ablegevorrichtung nach einem der vorherigen Ansprüche unter Einschluss von Anspruch 3, **dadurch gekennzeichnet, dass** die Führungsvorrichtung eine Kulisse ausbildet, in der das Anlagemittel (24) verläuft.

11. Ablegevorrichtung nach einem der vorherigen Ansprüche, **dadurch gekennzeichnet, dass** der Ablegerahmen (10) in einer Ansicht in Querrichtung (Q) eine Auflaufschräge zur Erzeugung eines vom Untergrund (26) nach oben gerichteten Impuls aufweist.

12. Erntemaschine für Erntegut insbesondere in Form von Hackfrüchten, mit einem an einem Rahmen (20) gelagerten Förderer (6) zum Transport des Ernteguts zu einer Ablegevorrichtung (8), **dadurch gekennzeichnet, dass** die Ablegevorrichtung (8) nach einem der vorherigen Ansprüche ausgebildet ist.

13. Erntemaschine nach Anspruch 12 und unter Einschluss einer Ablegevorrichtung (8) nach Anspruch 2, **dadurch gekennzeichnet, dass** der Lenker (16) zwecks zumindest eines teilweisen Hintergreifens eines Rahmens (20) der Erntemaschine (2) gekrümmt ausgebildet ist.
